# EUROPÄISCHE PATENTSCHRIFT

(11) **EP 0 361 142 B1**
(45) Veröffentlichungstag und Bekanntmachung des Hinweises auf die Patenterteilung: **18.01.1995**
(21) Anmeldenummer: 89116378.4
(22) Anmeldetag: 05.09.1989
(51) Int. Cl.: H04L 12/40

(54) **Universeller Standard-Bus**
Universal standard bus
Bus standard universel

(30) Priorität: 29.09.1988 DE 3833141
(43) Veröffentlichungstag der Anmeldung: 04.04.1990
(73) Patentinhaber: SIEMENS AKTIENGESELLSCHAFT, 80333 München (DE)
(72) Erfinder: Thurner, Erwin, Dipl.-Ing., D-8000 München 70 (DE)

(56) Entgegenhaltungen:
- EP-A- 0 184 320
- EP-A- 0 206 102

## Beschreibung

Die vorliegende Erfindung betrifft einen universellen Standard-Bus nach dem Oberbegriff des Patentanspruchs 1.

Nach dem Stand der Technik ist es im Falle des Vorliegens neuer spezieller Anforderungen an das Bus-System einer Datenverarbeitungsanlage, einer Meß- und/oder Regelungsdaten - Übertragungsanordnung oder dergl. notwendig, jeweils einen an diese neuen Anforderungen angepaßten Bus zu konzipieren oder einen Standard-Bus um einige Spezial-Leitungen zu erweitern (siehe z.B. Dokument EP-A- 0 184 320). In beiden Fällen können keine sog. Standard-Boards mehr verwendet werden. Vielmehr müssen Boards mit speziellen Busschnittstellen (Interfaces) geschaffen werden. Aus diesen Sachverhalten ergeben sich verschiedene Nachteile.

Der Erfindung liegt die Aufgabe zugrunde einen universell verwendbaren Standard-Bus zu schaffen, der aufgrund seiner Flexiblität auf die meisten Arten von Systemen, die einen Bus benötigen, angewendet werden kann.

Zur Lösung der Aufgabe wird ein universeller Standard-Bus der eingangs genannten Art und gemäß dem Oberbegriff des Patentanspruchs 1 vorgeschlagen, der durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die Erfindung im einzelnen anhand einer ein einfaches Ausführungsbeispiel betreffenden Figur beschrieben.

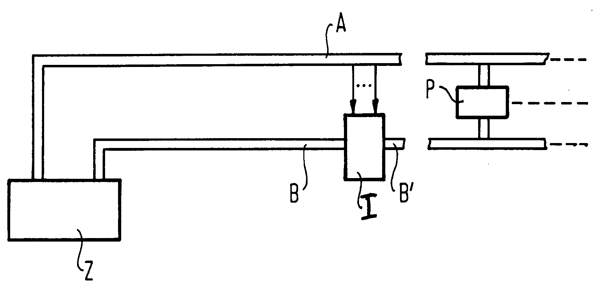

Der erfindungsgemäße Bus besteht, wie die Figur zeigt, aus zwei Teilbussen A, B über die eine zentrale Einrichtung Z mit einer oder mehreren peripheren Einrichtung P kommunizieren kann. Teilbus A ist ein einfacher Bus mit fest definiertem Protokoll und fester Steckerbelegung. Teilbus B ist - in weiten Grenzen - vom Anwender frei definierbar. Es können also praktisch die für jede Anwendung optimale Steckerbelegung und das optimale Protokoll festgelegt werden. Das für Teilbus B erforderliche Bus-Interface I ist nicht fest verdrahtet, sondern besteht aus Verknüpfungs-Bausteinen bekannter Art, die sich per Software "verdrahten", nämlich konfigurieren lassen. (Solche Bausteine können beispielsweise Logic Gell Arrays sein.) Die "Verdrahtungs"-Daten werden mit Hilfe von Teilbus A übertragen.

### Beispiel 1: Interrupt-Leitungen für ein NuBus-ähnliches Protokoll.

Für ein System wird ein Protokoll mit den Möglichkeiten des NuBus benötigt. Zusätzlich gibt es zeitkritische Interrupts. Diese Anwendung ist nicht mit dem NuBus abzudecken, weil hier Interrupts mit " Message Passing" übertragen werden, so daß vor jeder Übertragung ein Arbitrierungszyklus und evtl. ein Wartezyklus notwendig ist.

### Realisierung mit dem erfindungsgemäßen Bus:

Die Arbitrierung übernimmt das Bus-Interface vollständig (kleine "Finite State Machine"). Das "Message Passing" ist realisiert durch den üblichen Speicher und einen Adreß-Decoder (führt zum Interrupt, wenn die Message Passing-Adresse angesprochen wird). Der schnelle Interrupt ist die einfache Weiterleitung des Signals durch das Bus-Interface hindurch zum Interrupt-Controller.

### Beispiel 2: 40 bit-Datenbus für ein VMEbus-ähnliches Protokoll.

Ein auf dem VMEbus basierendes System braucht einen lokalen Speicherbus mit 40 bit Datenbreite, um für LISP-Anwendungen 32 bit Daten und 8 bit Tag verfügbar zu haben. Mit dem VMEbus müßte ein spezieller, 8 bit breiter Bus angeschlossen werden, zu dem es keine Standard-Speicherboards gibt.

### Realisierung mit dem erfindungsgemäßen Bus:

Es werden einfach 8 zusätzliche Leitungen und ein Byte-Enable definiert. Außerdem kann auf die (hier überflüssige) Arbitrierung verzichtet werden. So können auch Standard-Speicherboards verwendet werden, auch wenn sie möglicherweise für diese Anwendung nur teilweise genutzt werden.

Um den Hardware-Aufwand für das Bus-Interface I in vertretbaren Grenzen zu halten, ist es sinnvoll, nicht eine völlig beliebige Verteilung der Signalleitungen zuzulassen, sondern bestimmte Vorschriften aufzustellen. Bei einem "Europastecker" hätten sie beispielsweise folgenden Inhalt: Die Pins für Spannungsversorgung und Masse (GND) sind fest definiert; die gesamte Arbitrierung muß auf einem Stecker untergebracht sein; es sind nur bestimmte Anzahlen von Daten- und Adreß-Leitungen pro Stecker zulässig, usw. Voraussetzung für die funktionierende Anwendung von Teilbus B ist ein sinnvolles Bus-Protokoll. Hierfür könnte der Benutzer durch eine Art "Protokoll-Compiler" unterstützt werden.

## Patentansprüche

1. Universeller Standard-Bus für die Übertragung digitaler Daten, bei dem der Bus in einen ersten Teilbus (A), der als Hauptbus fungiert, und einen zweiten Teilbus (B), der als Ergänzungsbus fungiert, unterteilt ist, dadurch gekennzeichnet, daß der erste Teilbus (A) ein fest definiertes Protokoll und eine feste Steckerbelegung aufweist und daß der zweite Teilbus (B) eine Bus-Schnittstelle (Interface) (I) enthält, mittels derer eine vom Anwender frei definierbare Steckerbelegung durch in der Bus-Schnittstelle (I) vorgesehene digitale Bausteine, die software-mäßig konfigurierbar sind, festgelegt werden kann und, daß für die Konfigurierung der Bausteine in der Bus-Schnittstelle (I) erforderliche Daten dieser über den ersten Teilbus (A) zugeführt werden.

2. Universeller Standard-Bus nach Anspruch 1, **dadurch gekennzeichnet**, daß die Bausteine Verknüpfungsbausteine (Logic Cell Arrays) sind.

## Claims

1. Universal standard bus for the transmission of digital data, in which the bus is divided into a first sub-bus (A) functioning as the main bus and a second sub-bus (B) functioning as an auxiliary bus, characterized in that the first sub-bus (A) has a fixed defined protocol and a fixed pin assignment, and in that the second sub-bus (B) contains a bus interface (I) by means of which it is possible to define a pin assignment, which can be defined freely by the user, by means of digital modules which are provided in the bus interface (I) and can be configured by the software, and in that data required for configuring the modules in the bus interface (I) are supplied thereto via the first sub-bus (A).

2. Universal standard bus according to Claim 1, characterized in that the modules are logic modules (logic cell arrays).

## Revendications

1. Bus standard universel destiné à la transmission de données numériques, qui est subdivisé en un premier bus partiel (A), qui fonctionne en tant que bus principal, et en un second bus partiel (B), qui fonctionne en tant que bus complémentaire, caractérisé en ce que le premier bus partiel (A) possède un protocole défini de façon fixe et une occupation fixe des connecteurs et que le second bus partiel (B) comporte un interface de bus (interface) (I), au moyen duquel une occupation de connecteurs, qui peut être définie librement par l'utilisateur, peut être fixée par des modules numériques, qui sont prévus dans l'interface de bus (I) et qui peuvent être configurés en logiciel, et en ce que des données nécessaires à la configuration des modules dans l'interface de bus sont envoyées à celui-ci par l'intermédiaire du premier bus partiel (A).

2. Bus standard universel suivant la revendication 1, caractérisé par le fait que les modules sont des modules combinatoires (Logic Cell Arrays).
